# EUROPEAN PATENT APPLICATION

(11) **EP 4 641 345 A1**
(43) Date of publication of application: **29.10.2025**
(21) Application number: 25168862.8
(22) Date of filing: 07.04.2025
(51) Int. Cl.: G05D 16/00, G05D 16/10

(54) **PRESSURE REGULATING VALVE**

(30) Priority: 26.04.2024 JP 2024072181
(71) Applicant: Yanmar Holdings Co., Ltd., Osaka-shi, Osaka (JP)
(72) Inventor: AOKI, Hiroki, Osaka-shi (JP); KUBOTA, Hiroki, Osaka-shi (JP)
(74) Representative: Sekiguchi, Kazuya

(57) **Abstract**

[Problem] To prevent wear and seizure of a valve body, riding of the valve body on an outflow port, and biting of foreign matter into a gap between the outflow port and the valve body.

[Solution] The pressure regulating valve 7 includes a valve body 10, a support portion 20 slidably supporting the valve body 10, an inflow port 21 allowing a fluid to flow into the support portion 20 along a sliding direction C of the valve body 10, an outflow port 22 allowing the fluid to flow out from the support portion 20 in a direction crossing the sliding direction C of the valve body 10, and a biasing member 30 biasing the valve body 10 toward the inflow port 21, in which the valve body 10 includes a recess opening toward the inflow port 21.

## Description

### TECHNICAL FIELD

The present invention relates to a pressure regulating valve.

### BACKGROUND ART

A pressure regulating valve is known in which a valve body is pressed against a seat portion of an outer cylinder by a spring to maintain sealing and when a pressure acting on the valve body becomes larger than a force of the spring, the valve body moves to form a flow of a fluid (for example, Patent Documents 1 and 2).

### PRIOR ART DOCUMENT

### PATENT DOCUMENT

Patent Document 1: Japanese Unexamined Patent Application Publication No. 9-112408
Patent Document 2: Japanese Unexamined Patent Application Publication No. 5-296118

### SUMMARY OF INVENTION

### TECHNICAL PROBLEM

However, in the pressure regulating valves disclosed in Patent Documents 1 and 2, since a pressure applied to an outer peripheral surface of a valve body is not uniform, the outer peripheral surface of the valve body may come into contact with an outflow port to cause wear or seizure, or the valve body may ride on the outflow port to prevent the valve body from being closed. Furthermore, since a gap between the valve body and the outflow port is narrow, foreign matter may be caught in the gap.

In consideration of the above circumstances, an object of the present invention is to suppress occurrence of wear and seizure of a valve body, riding of the valve body on an outflow port, and biting of foreign matter into a gap between the outflow port and the valve body.

### SOLUTION TO PROBLEM

In order to solve the above problems, a pressure regulating valve according to the present invention includes a valve body, a support portion that slidably supports the valve body, an inflow port that allows a fluid to flow into the support portion along a sliding direction of the valve body, an outflow port that allows the fluid to flow out from the support portion along a direction crossing the sliding direction of the valve body, and a biasing member that biases the valve body toward the inflow port. The valve body has a recess opening toward to the inflow port.

The valve body may include at least one hole portion that penetrates from the recess to an outer peripheral surface of the valve body, and the inflow port and the outflow port may communicate with each other via the hole portion when the valve body slides due to a pressure of a fluid flowing in from the inflow port.

The hole portions may be formed at a plurality of positions in the sliding direction of the valve body.

The hole portions may include first hole portions formed at a plurality of positions in a circumferential direction of the valve body, and a second hole portion that is more distant from the inflow port than the first hole portions.

A total area of the second hole portion may be smaller than a total area of the first hole portions.

The support portion may include a groove portion communicating with the outflow port and extending along the circumferential direction.

The valve body may have a tapered portion at an end portion closer to the recess.

### ADVANTAGEOUS EFFECTS OF INVENTION

According to the present invention, occurrence of wear and seizure of the valve body, riding of the valve body on the outflow port, and biting of foreign matter into the gap between the outflow port and the valve body may be suppressed.

### BRIEF DESCRIPTION OF DRAWINGS

FIG. 1 is a system diagram illustrating a fuel supply system according to an embodiment of the present invention.
FIG. 2 is a cross-sectional view illustrating a pressure regulating valve according to the embodiment of the present invention.
FIG. 3 is a cross-sectional view illustrating the pressure regulating valve according to the embodiment of the present invention.
FIG. 4 is a cross-sectional view illustrating the pressure regulating valve according to the embodiment of the present invention.
FIG. 5 is a cross-sectional view illustrating a pressure regulating valve in the related art.
FIG. 6 is a cross-sectional view illustrating the pressure regulating valve in the related art.
FIG. 7 is a cross-sectional view illustrating a state in which a valve body slides due to a pressure of a fluid flowing in from an inflow port in the pressure regulating valve in the related art.
FIG. 8 is a cross-sectional view taken along a line I-I in FIG. 7.
FIG. 9 is an enlarged cross-sectional view of a region E in FIG. 7.

### DESCRIPTION OF EMBODIMENTS

Hereinafter, a pressure regulating valve 7 and a fuel supply system 1 according to an embodiment of the present invention will be described with reference to the accompanying drawings.

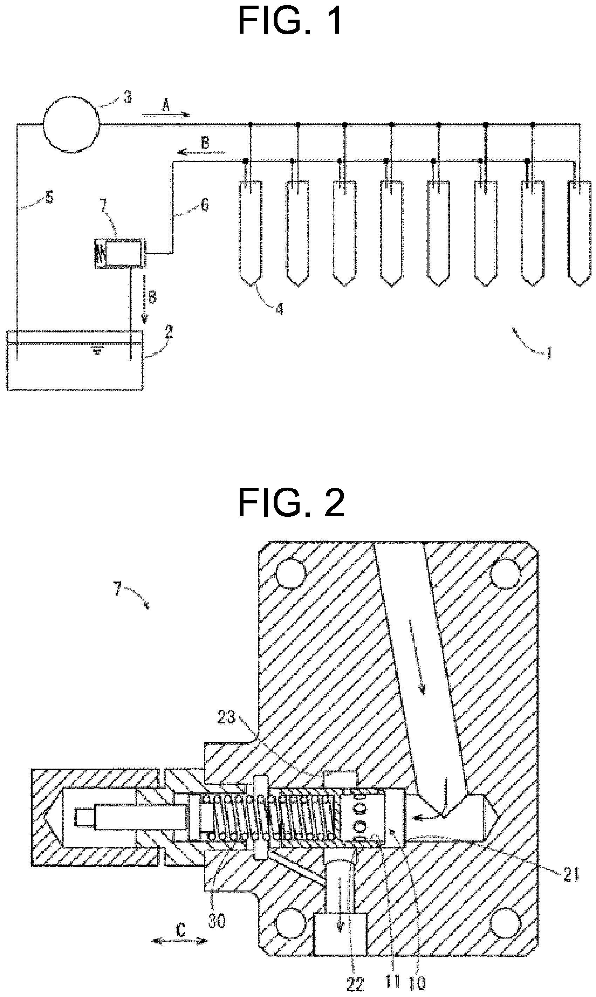

First, a configuration of the fuel supply system 1 will be described. FIG. 1 is a system diagram illustrating the fuel supply system 1.

The fuel supply system 1 includes a tank 2, a pump 3, fuel injection valves 4, a supply pipe 5, a return pipe 6, and the pressure regulating valve 7. The fuel supply system 1 supplies light oil to a diesel engine, for example. Note that the present invention is also applicable to liquid fuels other than light oil and gaseous fuels. The present invention is further applicable to a system that supplies a fluid other than fuel, such as lubricating oil, cooling oil, or cooling water.

The tank 2 stores fuel. The tank 2, the pump 3, and the plurality of fuel injection valves 4 are connected by the supply pipe 5. The pump 3 is disposed between the tank 2 and the plurality of fuel injection valves 4. The supply pipe 5 branches downstream of the pump 3 in a supply direction A before being connected to the plurality of fuel injection valves 4. The plurality of fuel injection valves 4, the pressure regulating valve 7, and the tank 2 are connected by the return pipe 6. The pressure regulating valve 7 is disposed between the fuel injection valves 4 and the tank 2. Branches of the return pipe 6 connected to the plurality of fuel injection valves 4 join together upstream of the pressure regulating valve 7 in a fuel return direction B. The fuel supplied from the tank 2 through the supply pipe 5 is injected into a cylinder of the diesel engine by the fuel injection valves 4. Excess fuel is returned to the tank 2 through the return pipe 6.

FIGS. 2 to 4 are cross-sectional views illustrating the pressure regulating valve 7. The pressure regulating valve 7 includes a valve body 10, a support portion 20 slidably supporting the valve body 10, an inflow port 21 allowing a fluid to flow into the support portion 20 along a sliding direction C of the valve body 10, an outflow port 22 allowing the fluid to flow out from the support portion 20 in a direction crossing the sliding direction C of the valve body 10, and a biasing member 30 biasing the valve body 10 toward the inflow port 21. The valve body 10 has a recess 11 opening toward to the inflow port 21.

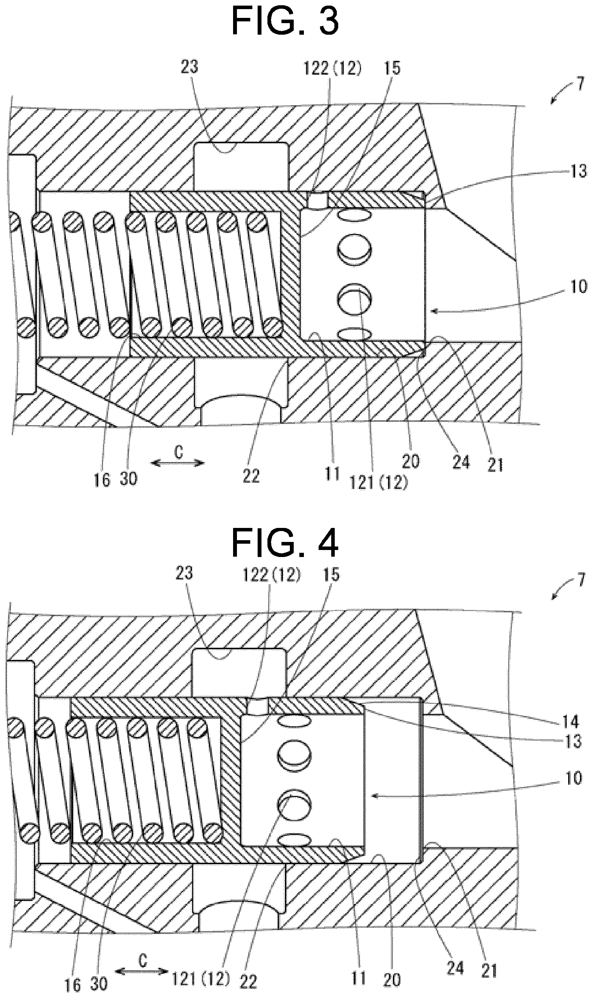

The valve body 10 (see FIGS. 3 and 4) is formed in a cylindrical shape. At substantially the center of the valve body 10 in a longitudinal direction (sliding direction C), a partition wall portion 15 is provided to divide an internal space of the valve body 10 into the recess 11 and an accommodation portion 16. Although the partition wall portion 15 is provided substantially at the center in the longitudinal direction of the valve body 10 in this embodiment, the partition wall portion 15 may not be provided at the center. The valve body 10 has hole portions 12 penetrating from the recess 11 to an outer peripheral surface of the valve body 10. The hole portions 12 include first hole portions 121 formed at a plurality of positions in a circumferential direction of the valve body 10 and a second hole portion 122 formed closer to the partition wall portion 15 than the first hole portions 121. Although only one second hole portion 122 is formed in this embodiment, a plurality of second hole portions 122 may be formed. However, a total area of the second hole portions 122 is smaller than a total area of the first hole portions 121. For example, in this embodiment, the first hole portions 121, each of which has a larger area than the second hole portion 122, are formed at a plurality of positions. Although the first hole portions 121 and the second hole portion 122 have circular shapes in this embodiment, arbitrary shapes may be employed.

The support portion 20 is a cylindrical cavity having an inner diameter corresponding to an outer diameter of the valve body 10. The valve body 10 is accommodated in the support portion 20. The support portion 20 slidably supports the valve body 10. The inflow port 21 for allowing fuel to flow in from the return pipe 6 is formed at one end portion in the longitudinal direction (sliding direction C) of the support portion 20. The valve body 10 is disposed with the recess 11 facing the inflow port 21. An inner diameter of the inflow port 21 is smaller than the inner diameter of the support portion 20. A step formed between one end portion of the support portion 20 and the inflow port 21 functions as a valve seat portion 24 with which an end portion 13 of the valve body 10 closer to the recess 11 comes into contact.

The biasing member 30 is disposed at the other end portion of the support portion 20 in the longitudinal direction. The biasing member 30 is a compression coil spring, for example. An end portion of the biasing member 30 closer to the valve body 10 is accommodated in the accommodation portion 16 of the valve body 10. The biasing member 30 biases the valve body 10 toward the inflow port 21.

A tapered portion 14 is formed at an end portion 13 of the valve body 10 closer to the recess 11. Although the tapered portion 14 is formed on an outer peripheral surface of the end portion 13 of the valve body 10 closer to the recess 11 in this embodiment, the tapered portion 14 may be formed on an inner peripheral surface of the end portion 13 of the valve body 10 closer to the recess 11.

The support portion 20 includes a groove portion 23. The groove portion 23 is formed on an inner surface of the support portion 20 along the circumferential direction. A position of the groove portion 23 in the sliding direction C corresponds to a position of the outflow port 22. The groove portion 23 communicates with the outflow port 22.

When a pressure of a fluid flowing in from the inflow port 21 is equal to or less than a biasing force of the biasing member 30 (see FIG. 3), the valve body 10 abuts on the valve seat portion 24, and the first hole portions 121 and the second hole portion 122 are positioned closer to the inflow port 21 than the groove portion 23. In this case, the inflow port 21 and the outflow port 22 do not communicate with each other.

When a pressure of the fluid flowing in from the inflow port 21 is larger than the biasing force of the biasing member 30 (see FIG. 4), the valve body 10 moves to the left, the entire second hole portion 122 overlaps the groove portion 23, and portions of the first hole portions 121 disposed closer to the partition wall portion 15 overlap the groove portion 23. In this case, the inflow port 21 and the outflow port 22 communicate with each other, and the fluid flows from the inflow port 21 to the outflow port 22 via the first hole portions 121, the second hole portion 122, and the groove portion 23.

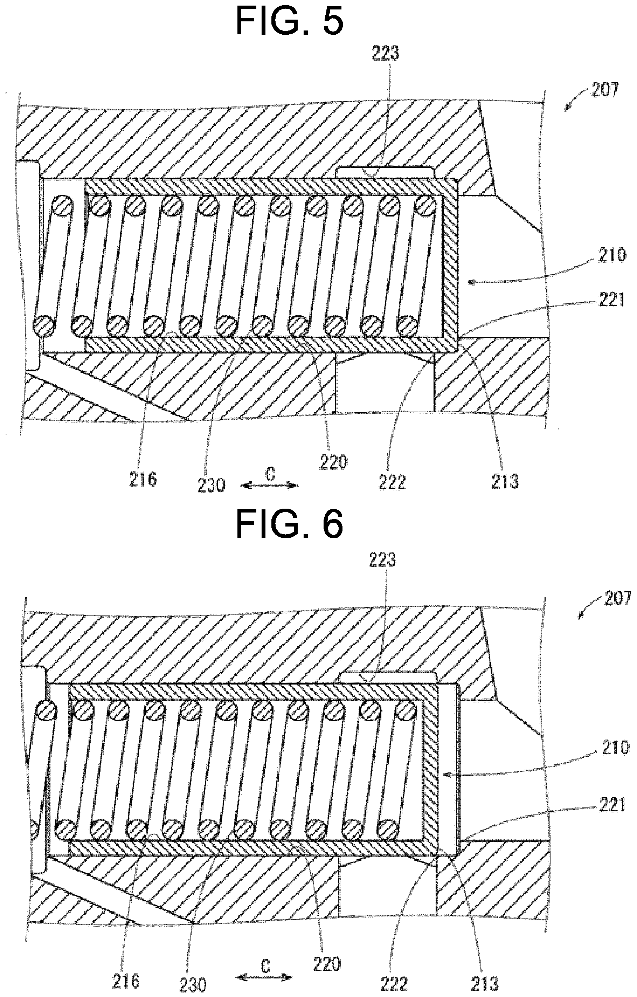

FIGS. 5 and 6 are cross-sectional views illustrating a pressure regulating valve 207 in the related art. A valve body 210 has a cylindrical shape with one end portion closed, and includes an accommodation portion 216 that accommodates a biasing member 230. An outflow port 222 and a groove portion 223 are closer to an inflow port 221 than those in this embodiment.

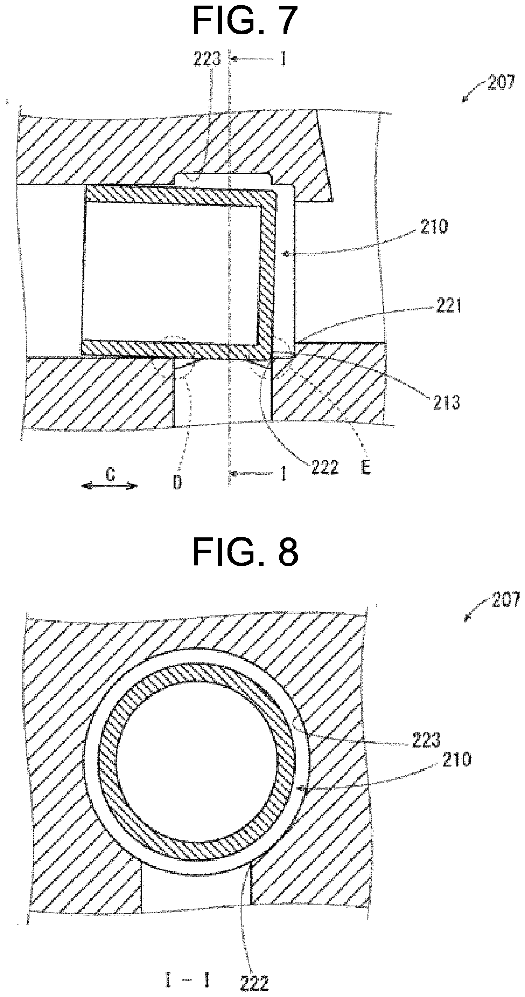

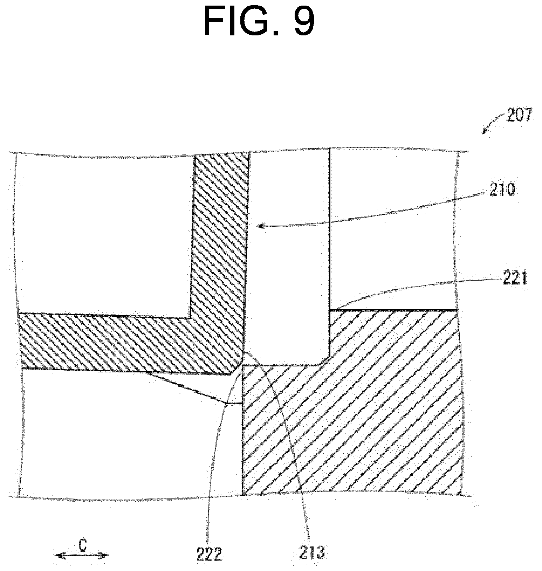

FIG. 7 is a cross-sectional view illustrating a state in which the valve body 210 slides due to a pressure of a fluid flowing in from the inflow port 221 in the pressure regulating valve 207 in the related art. FIG. 8 is a cross-sectional view taken along a line I-I of FIG. 7. FIG. 9 is an enlarged cross-sectional view of a region E in FIG. 7. In FIG. 7, the valve body 210 is shortened to facilitate understanding of the behavior of the valve body 210. Furthermore, in FIGS. 7 to 9, the biasing member 230 is omitted. Since the outflow port 222 is opening toward to the atmosphere, a pressure of the fluid in the groove portion 223 decreases toward a lower side. Therefore, there is a problem in that an end portion 213 of the valve body 210 closer to the inflow port 221 is pushed downward, and an outer peripheral surface of the valve body 210 rubs against an angular portion of the outflow port 222 to be worn or seized (see a region D in FIG. 7). Furthermore, there is a problem in that the end portion 213 of the valve body 210 closer to the inflow port 221 rides on an angular portion of the outflow port 222 closer to the inflow port 221 and the valve body 210 may not be closed (refer to the region E in FIG. 7). Moreover, there is a problem in that foreign matter is caught in a gap (refer to FIG. 9) between the end portion 213 of the valve body 210 closer to the inflow port 221 and the angular portion of the outflow port 222 closer to the inflow port 221, and the valve body 210 may not be closed.

On the other hand, according to this embodiment, since a pressure acting on the valve body 10 is dispersed by the recess 11, a posture change of the valve body 10 during sliding is suppressed. Furthermore, in this embodiment, as compared with the pressure regulating valve 207 in the related art, the groove portion 23 is formed at a position spaced away from the inflow port 21. Therefore, even when the valve body 10 slides due to a pressure of the fluid, the outer peripheral surface of the valve body 10 closer to the recess 11 is supported by the support portion 20, and a posture change of the valve body 10 is suppressed. Therefore, according to this embodiment, occurrence of wear and seizure of the valve body 10, riding of the valve body 10 on the outflow port 22, and biting of foreign matter into the gap between the outflow port 22 and the valve body 10 may be suppressed.

According to the pressure regulating valve 7 of this embodiment described above, the pressure regulating valve 7 includes the valve body 10, the support portion 20 slidably supporting the valve body 10, the inflow port 21 allowing the fluid to flow into the support portion 20 along the sliding direction C of the valve body 10, the outflow port 22 allowing the fluid to flow out from the support portion 20 along the direction intersecting the sliding direction C of the valve body 10, and the biasing member 30 biasing the valve body 10 toward the inflow port 21. The valve body 10 has the recess 11 opening toward to the inflow port 21. According to this embodiment, occurrence of wear and seizure of the valve body 10, riding of the valve body 10 on the outflow port 22, and biting of foreign matter into the gap between the outflow port 22 and the valve body 10 may be suppressed.

Furthermore, according to the pressure regulating valve 7 of this embodiment, the valve body 10 includes the hole portions 12 penetrating from the recess 11 to the outer peripheral surface of the valve body 10, and when the valve body 10 slides by a pressure of a fluid flowing in from the inflow port 21, the inflow port 21 and the outflow port 22 communicate with each other via the hole portions 12. According to this embodiment, a pressure acting on the outer peripheral surface of the valve body 10 is dispersed when the fluid flows out from the hole portions 12 to the outer peripheral surface of the valve body 10, and therefore, a posture change of the valve body 10 during sliding is further suppressed.

Moreover, according to the pressure regulating valve 7 of this embodiment, the hole portions 12 are formed on the valve body 10 at a plurality of positions in the sliding direction C. According to this embodiment, since the pressure acting on the outer peripheral surface of the valve body 10 is also dispersed in the sliding direction C, the posture change of the valve body 10 during sliding is further suppressed.

Furthermore, according to the pressure regulating valve 7 of this embodiment, the hole portions 12 include the first hole portions 121 formed at a plurality of positions in the circumferential direction of the valve body 10 and the second hole portion 122 more distant from the inflow port 21 than the first hole portions 121. According to this embodiment, when foreign matter enters the recess 11, the foreign matter may be discharged from the second hole portion 122 at a pressure lower than a pressure required for communication between the first hole portions 121 and the outflow port 22.

Furthermore, according to the pressure regulating valve 7 of this embodiment, a total area of the second hole portion 122 is smaller than a total area of the first hole portions 121. If the total area of the second hole portion 122 is larger, a force pressing the valve body 10 is lost at a low flow rate, and a communication state of the second hole portion 122 may not be maintained. On the other hand, according to this embodiment, since the communication can be reliably secured even at a small flow rate, foreign matter discharge performance is improved.

Moreover, according to the pressure regulating valve 7 of this embodiment, the support portion 20 includes the groove portion 23 that communicates with the outflow port 22 and extends along the circumferential direction. According to this embodiment, since a pressure acting on the outer peripheral surface of the valve body 10 is dispersed in the circumferential direction by the fluid flowing into the groove portion 23 from the hole portions 12, a posture change of the valve body 10 during the sliding is further suppressed.

Furthermore, according to the pressure regulating valve 7 of this embodiment, the valve body 10 has the tapered portion 14 at the end portion closer to the recess 11. According to this embodiment, since a pressure acts in a radial direction of the valve body 10, a posture change of the valve body 10 during sliding is further suppressed.

### Appendices

This embodiment may also be specified as the following invention.

### Appendix 1

A pressure regulating valve comprising:
a valve body;
a support portion that slidably supports the valve body;
an inflow port that allows a fluid to flow into the support portion along a sliding direction of the valve body;
an outflow port that allows the fluid to flow out from the support portion along a direction crossing the sliding direction of the valve body; and
a biasing member that biases the valve body toward the inflow port, wherein
the valve body has a recess opening toward to the inflow port.

### Appendix 2

The pressure regulating valve according to Appendix 1, wherein
the valve body includes at least one hole portion that penetrates from the recess to an outer peripheral surface of the valve body, and
the inflow port and the outflow port communicate with each other via the hole portion when the valve body slides due to a pressure of a fluid flowing in from the inflow port.

### Appendix 3

The pressure regulating valve according to Appendix 2, wherein the hole portions are formed at a plurality of positions in the sliding direction of the valve body.

### Appendix 4

The pressure regulating valve according to Appendix 3, wherein
the hole portions include
first hole portions formed at a plurality of positions in a circumferential direction of the valve body, and
a second hole portion that is more distant from the inflow port than the first hole portions.

### Appendix 5

The pressure regulating valve according to Appendix 4, wherein a total area of the second hole portion is smaller than a total area of the first hole portions.

### Appendix 6

The pressure regulating valve according to any one of Appendices 1 to 5, wherein the support portion includes a groove portion communicating with the outflow port and extending along the circumferential direction.

### Appendix 7

The pressure regulating valve according to any one of Appendices 1 to 6, wherein the valve body has a tapered portion at an end portion closer to the recess.

### REFERENCE SIGNS LIST

10 VALVE BODY
11 RECESS
12 HOLE PORTION
121 FIRST HOLE PORTION
122 SECOND HOLE PORTION
14 TAPERED PORTION
20 SUPPORT PORTION
21 INFLOW PORT
22 OUTFLOW PORT
23 GROOVE PORTION
30 BIASING MEMBER

## Claims

1. A pressure regulating valve comprising:
a valve body;
a support portion that slidably supports the valve body;
an inflow port that allows a fluid to flow into the support portion along a sliding direction of the valve body;
an outflow port that allows the fluid to flow out from the support portion along a direction crossing the sliding direction of the valve body; and
a biasing member that biases the valve body toward the inflow port, wherein
the valve body has a recess opening toward to the inflow port.

2. The pressure regulating valve according to claim 1, wherein
the valve body includes at least one hole portion that penetrates from the recess to an outer peripheral surface of the valve body, and
the inflow port and the outflow port communicate with each other via the hole portion when the valve body slides due to a pressure of the fluid flowing in from the inflow port.

3. The pressure regulating valve according to claim 2, wherein the hole portions are formed at a plurality of positions in the sliding direction of the valve body.

4. The pressure regulating valve according to claim 3, wherein
the hole portions include
first hole portions formed at a plurality of positions in a circumferential direction of the valve body, and
a second hole portion that is more distant from the inflow port than the first hole portions.

5. The pressure regulating valve according to claim 4, wherein a total area of the second hole portion is smaller than a total area of the first hole portions.

6. The pressure regulating valve according to any one of claims 1 to 5, wherein the support portion includes a groove portion communicating with the outflow port and extending along the circumferential direction.

7. The pressure regulating valve according to claim 1, wherein the valve body has a tapered portion at an end portion closer to the recess.
